# FASCICULE DE BREVET EUROPEEN

(11) **EP 2 158 110 B1**
(45) Date de publication et mention de la délivrance du brevet: **10.04.2013**
(21) Numéro de dépôt: 08805991.0
(22) Date de dépôt: 12.06.2008
(51) Int. Cl.: B60W 50/14, B60R 16/023, F16H 63/42, B60K 35/00

(54) **PROCEDE INTERACTIF POUR AIDER LE CONDUCTEUR D'UN VEHICULE AUTOMOBILE A ADOPTER UNE CONDUITE ECONOMIQUE ET VEHICULE METTANT EN OEUVRE CE PROCEDE**
INTERAKTIVES VERFAHREN ZUR UNTERSTÜTZUNG DES FAHRERS EINES MOTORFAHRZEUGS BEI DER ERLANGUNG EINES ÖKONOMISCHEN FAHRSTILS UND FAHRZEUG ZUR ANWENDUNG DIESES VERFAHRENS
INTERACTIVE METHOD FOR HELPING THE DRIVER OF A MOTOR VEHICLE TO ADOPT AN ECONOMICAL DRIVING STYLE AND VEHICLE USING THIS METHOD

(30) Priorité: 19.06.2007 FR 0755833
(43) Date de publication de la demande: 03.03.2010
(73) Titulaire: Peugeot Citroën Automobiles SA, 78140 Vélizy-Villacoublay (FR)
(72) Inventeur: LECOINTRE, Bruno, 69002 Lyon (FR); FRANCAIS, Yves, F-92320 Chatillon (FR)
(74) Mandataire: Ménès, Catherine
(86) Numéro de dépôt international: PCT/FR2008/051056
(87) Numéro de publication internationale: WO 2009/004224

(56) Documents cités:
- EP-A- 1 775 501
- DE-A1- 10 321 519
- DE-A1-102004 021 013
- US-A- 6 092 021

## Description

. La présente invention revendique la priorité de la demande française 0755833 déposée le 19/06/2007 dont le contenu (description, revendications et dessins) est incorporé ici par référence.

. L'invention concerne un procédé interactif pour aider le conducteur d'un véhicule automobile à adopter une conduite économique et un véhicule mettant en oeuvre ce procédé. L'invention a notamment pour but d'informer le conducteur de ses comportements de conduite à perfectionner pour limiter la consommation de son véhicule.

. L'invention trouve une application particulièrement avantageuse dans le domaine des véhicules automobiles à moteur thermique ou hybride, et à boîtes de vitesses de type manuelle ou automatique.

. La consommation des véhicules automobiles et leurs rejets de gaz à effet de serre (CO₂ principalement) est une problématique qui est de plus en plus soulignée, aussi bien par les pouvoirs publics (normes d'homologations, engagement des constructeurs visant à réduire les émissions moyennes à 140 g de CO₂/km d'ici 2008, protocole de Kyoto) que par les consommateurs (augmentation du prix du pétrole, ou influence de la presse automobile par exemple). L'obligation récente d'afficher « l'étiquette énergétique » dans les concessions automobiles renforce également cette attente marquée sur la réduction de la consommation.

. La consommation d'un véhicule dépend à la fois des performances intrinsèques du véhicule - comme le rendement de son moteur, sa masse ou son aérodynamisme - et de l'utilisation qui en est faite par le conducteur. Ce dernier peut en effet augmenter la consommation de son véhicule s'il adopte un conduite agressive (accélérations fortes et fréquentes) et s'il utilise fortement les dispositifs de confort de son véhicule (climatisation et systèmes audio/vidéo notamment).

. Le conducteur souhaitant volontairement avoir une conduite « économique » (que ce soit pour réduire ses émissions de gaz polluants ou pour réduire sa facture de carburant) ne dispose pas à l'heure actuelle de guide l'aidant pleinement dans sa démarche.

. En effet, on ne trouve aujourd'hui sur le marché que deux systèmes donnant des indications partielles pouvant aider le conducteur qui soit affiche la consommation instantanée de carburant, soit affiche un rapport conseillé.

. Le premier indicateur ne donne qu'une information instantanée et n'informe donc pas le conducteur sur la meilleure attitude à adopter aussi bien dans l'instant que dans le futur. De plus, la consommation instantanée varie d'un instant à l'autre en fonction de la moindre pression sur la pédale d'accélérateur, pente de la route, etc. de sorte que cette information est de fait pratiquement inexploitable par le conducteur. Le second indicateur renseigne davantage sur le comportement à adopter, mais ne fournit qu'une information très partielle. Aucun de ces systèmes commercialisés ne renseigne le conducteur sur les manières d'accélérer ou de freiner les plus adaptées.

. Par ailleurs, dans l'état de la technique décrit dans les documents de brevet US-4166382, FR-2437317, US-6092021, on ne propose qu'une information à une dimension (voyant, aiguille, afficheur de rapport conseillé). Il est également connu du document EP 1 775 501 un procédé d'aide à la conduite comportant les étapes suivantes :
- détection (F1, 15) a posteriori d'une situation de vie, qui est une séquence temporelle, du véhicule ;
- analyse (F1) du comportement du conducteur pendant cette situation de vie,
- sélection dans une mémoire (5) d'un comportement de conducteur recommandé pour la situation de vie courante,
- comparaison (F1, 16) entre ledit comportement du conducteur et le comportement recommandé, et
identification des points du comportement considérés comme perfectibles et diffusion (F4, F5, 27) d'un message d'information audio et/ou vidéo (7) invitant le conducteur à corriger son comportement sur au moins le point le plus critique. Il est connue du document DE 10 2004 021 013 une méthode de pilotage d'une boite de vitesse automatique qui prend en compte le choix par le conducteur d'un type de conduite donné. Enfin, il est connu du document US 6 092 021

. Il existe donc un besoin pour un véritable assistant qui serait capable d'analyser un ensemble d'actions du conducteur et de proposer des modifications appropriées, pour accorder le style de conduite avec un objectif donné comme par exemple un style économe, permettant de minimiser la consommation de carburant.

. Autrement dit, il existe le besoin d'un assistant capable d'analyser le comportement du conducteur et de lui proposer un comportement plus approprié par exemple pour réduire sa consommation s'il y a lieu.

. Conformément à l'invention, ce but est atteint par un procédé interactif d'aide à la conduite qui comporte les étapes suivantes :
- sélection d'un type de conduite souhaité,
- détection d'une situation de vie du véhicule,
- analyse du comportement du conducteur pendant cette situation de vie,
- sélection dans une mémoire d'un comportement de conducteur recommandé pour la situation de vie courante correspondant au type de conduite souhaité,
- comparaison entre ledit comportement du conducteur et le comportement recommandé, et
- identification des points du comportement considérées comme perfectibles et diffusion d'un message d'information audio et/ou vidéo (7) invitant le conducteur à corriger son comportement sur au moins le point le plus critique.

. Les messages audio et/ou vidéo selon l'invention sont des messages détaillant le comportement à adopter lors d'une situation de vie spécifique, par exemple lors d'un freinage prolongé, d'un dépassement, d'une vitesse stabilisée. Ces messages détaillent par exemple quand changer de rapport, comment enfoncer la pédale ou quand débrayer.

. Ainsi, dans l'invention, on identifie des situations de vie du véhicule, c'est-à-dire des séquences temporelles plus ou moins longues, alors que dans les procédés connus de l'état de l'art, l'information fournie est instantanée (régime et vitesse actuelle). En conséquence, dans l'invention, la détection des situations de vie est effectuée a posteriori et la fourniture de l'information est effectuée ultérieurement, après analyse de la situation de vie, de préférence à un moment qui ne risque pas de déconcentrer le conducteur.

. L'assistant peut fournir cette information sous forme audio (message vocal) ou sous forme audio et vidéo (message vocal accompagné d'une animation vidéo) si le véhicule dispose d'un équipement le permettant. Dans ce cas, l'animation vidéo est de préférence affichée seulement si le véhicule est à l'arrêt, par exemple lors d'une phase de « consultation » par le conducteur qui demande l'analyse de sa conduite par exemple pendant son dernier trajet - entré dans l'ordinateur de bord suite par exemple à l'initialisation d'un trajet - pour ne pas détourner son attention.

. L'assistant est capable de mémoriser les comportements perfectibles lors de la conduite afin d'indiquer au conducteur les comportements plus appropriés lorsque les conditions permettront de lui fournir ce message sans perturber son attention. Tout message vidéo est par exemple proscrit lorsque le véhicule n'est pas immobile. Dans ce cas, seul un message audio sera possible, si les conditions s'y prêtent.

. L'assistant peut également proposer au conducteur un résumé des points perfectibles les plus fréquents.

. De préférence, cet assistant est activé par demande du conducteur (soit par un bouton de mise en fonctionnement, soit par un menu dans l'ordinateur de bord) et est désactivé à tout moment de la même manière. Toutefois, il pourrait être également activé à distance par un gérant de flotte de véhicules par exemple.

. Dans une réalisation, l'assistant est une fonction logicielle ne nécessitant aucune instrumentation particulière. Elle est intégrée dans un des calculateurs du véhicule, et connectée au réseau de communication du véhicule (bus CAN) afin d'obtenir les informations utiles pour son fonctionnement. En outre, elle est connecté au système audio (et vidéo si l'équipement le permet) afin d'informer le conducteur.

. Toutefois, l'assistant selon l'invention pourrait également prendre la forme d'un circuit électronique indépendant connecté à l'ordinateur de bord.

. L'invention concerne donc un procédé interactif d'aide à la conduite, caractérisé en ce qu'il comporte les étapes suivantes,
- sélection d'un type de conduite souhaité,
- détection d'une situation de vie du véhicule ;
- analyse du comportement du conducteur pendant cette situation de vie,
- sélection dans une mémoire d'un comportement de conducteur recommandé pour la situation de vie courante correspondant au type de conduite souhaité,
- comparaison entre ledit comportement du conducteur et le comportement recommandé, et
- identification des points du comportement considérés comme perfectibles et diffusion d'un message d'information audio et/ou vidéo (7) invitant le conducteur à corriger son comportement sur au moins le point le plus critique.

. Selon une mise en oeuvre, le type de conduite souhaité est une conduite minimisant la consommation de carburant.

. Selon une mise en oeuvre, la situation de vie est choisie parmi : une phase de décélération sans freinage, une phase de décélération avec freinage, un dépassement, une évolution à vitesse stabilisée.

. Selon une mise en oeuvre, le message audio et/ou vidéo n'est diffusé que si la situation de vie est considérée comme stable.

. Selon une mise en oeuvre, le comportement perfectible est mémorisé pour autoriser la diffusion ou rediffusion du message d'information correspondant dans une condition de roulage favorable.

. Selon une mise en oeuvre, les messages vidéo sont diffusés uniquement lorsque le véhicule est à l'arrêt, et que le conducteur n'a pas le pied sur la pédale d'accélérateur.

. Selon une mise en oeuvre, la condition de roulage est considérée comme stable si le véhicule est dans la même situation de vie depuis au moins 2s et si le conducteur a le pied sur la pédale d'accélérateur.

. Selon une mise en oeuvre, les conditions de roulage sont en outre considérées comme non réunies si le véhicule est en situation de virage.

. Selon une mise en oeuvre, les points observés du comportement sont sélectionnés parmi au moins deux des actions suivantes : état d'enfoncement de la pédale d'accélérateur, actionnement de la pédale de frein, choix d'un rapport, débrayage.

. Selon une mise en oeuvre, chaque occurrence d'un comportement considéré perfectible un compteur de comportements perfectibles est incrémenté.

. Selon une mise en oeuvre, à chacun des points de comportement observés est associé un compteur spécifique de points qui est incrémenté à chaque fois qu'un comportement perfectible est détecté qui pourrait être amélioré par une action sur ce point.

. Selon une mise en oeuvre, lorsque le compteur de comportements perfectibles atteint un certain seuil, un message est diffusé visant à l'amélioration du point dont le compteur est le plus élevé, invitant ainsi le conducteur à corriger son comportement sur au moins le point le plus critique.

. Selon une mise en oeuvre, le nombre d'occurrences des situations de vie est de plus mémorisé pour établir des statistiques sur la fréquence des comportements perfectibles.

. Selon une mise en oeuvre, l'ensemble des informations des compteurs et des statistiques sont mémorisés pour permettre une comparaison du comportement avant et après la diffusion d'un message d'information.

. Selon une mise en oeuvre, les compteurs sont remis à zéro à la demande du conducteur via un bouton ou une sélection d'options proposée par un ordinateur de bord.

. Selon une mise en oeuvre, le procédé selon l'invention présente deux niveaux de désactivation :
- un mode « veille » dans lequel on ne diffuse plus de message mais on continue d'analyser les comportements perfectibles, et
- un mode « désactivé » dans lequel toutes les fonctions de l'assistant sont désactivées.

. Selon une mise en oeuvre, le procédé selon l'invention comporte l'étape suivante :
- effectuer la distinction entre les deux niveaux de désactivation au moyen d'un bouton à trois positions pour actif / veille / inactif, ou
- au moyen d'un bouton poussoir pour lequel chaque pression fait passer de actif à veille, de veille à inactif et de inactif à actif, ou
- au moyen d'une option dans l'ordinateur de bord.

. Selon une mise en oeuvre, l'ensemble des informations des compteurs, mémoires et statistiques peut être déchargé vers un ordinateur non placé dans le véhicule.

. Selon une mise en oeuvre, on interdit la désactivation du procédé selon l'invention par construction.

. L'invention concerne en outre un véhicule automobile mettant en oeuvre le procédé selon l'invention.

. L'invention sera mieux comprise à la lecture de la description qui suit et à l'examen des figures qui l'accompagnent. Ces figures ne sont données qu'à titre illustratif mais nullement limitatif de l'invention. Elles montrent :

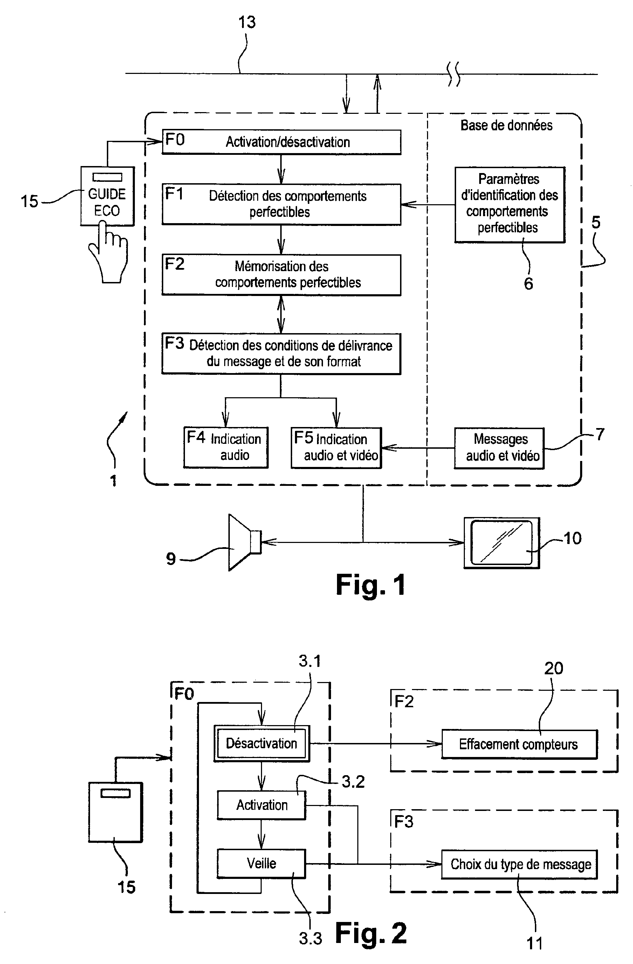

. Figure 1 : une représentation synoptique de l'assistant selon l'invention ;

. Figures 2-6 : des logigrammes des différentes fonctions F0-F5 mises en oeuvre par l'assistant selon l'invention.

. Les éléments identiques conservent la même référence d'une figure à l'autre.

. La figure 1 montre un module d'assistance 1 selon l'invention mettant en oeuvre des fonctions F0-F5 permettant analyser la conduite du conducteur et de l'informer sur le meilleur comportement à avoir pour optimiser sa conduite, en particulier pour limiter sa consommation.

. La fonction F0 assure l'activation et la désactivation de ce module 1 d'assistance. La fonction F1 assure l'analyse du comportement du conducteur et l'identification des points de comportement perfectibles. La fonction F2 assure la mémorisation des points de comportement perfectibles rencontrés. La fonction F3 assure la détection des conditions de délivrance du message de l'assistant et du type de message à fournir (audio, ou vidéo). La fonction F4 assure l'indication audio, tandis que la fonction F5 assure une indication audio et vidéo du comportement à améliorer.

. Le module 1 d'assistance est associé à une base de données 5 contenant les points de comportements 6 recommandés pour une situation de vie donnée ainsi que des messages 7 audio et vidéo associés à chaque comportement perfectible identifiable.

. Le module 1 est relié à un système audio 9, tel que des haut-parleurs du véhicule ainsi qu'à un système vidéo 10, tel que l'ordinateur de bord, afin de transmettre les messages 7 d'information à destination du conducteur.

. En outre, le module 1 d'assistance échange des données avec le réseau 13 de communication du véhicule, le module 1 d'assistante prélevant des informations sur ce réseau 13 pour identifier la situation de vie du véhicule et analyser des points de comportement du conducteur.

. Plus précisément, la mise en service du module 1 est effectuée lorsque le conducteur appuie sur un bouton 15 spécifique, ou effectue une action dans une interface graphique comme l'ordinateur de bord, via la fonction F0.

. Comme représenté sur la figure 2, la sous-fonction d'activation 3.2 ou de veille 3.3 permet le choix du type de message délivré (audio et/ou vidéo). En outre, la sous-fonction d'activation 3.2 permet au conducteur de sélectionner le type de conduite souhaité. Ce type de conduite est par défaut une conduite minimisant la consommation de carburant. Toutefois, il serait possible d'envisager également un type de conduite permettant d'avoir une consommation moyenne de carburant ou d'optimiser la vitesse du véhicule.

. Une fois que l'assistant est activé, la fonction F1 détecte la situation de vie du véhicule et les points de comportement perfectibles du conducteur.

. A cet effet, la fonction F1 analyse en temps réel les actions du conducteur, à partir des informations lues sur le réseau 13 de communication, comme par exemple l'enfoncement de la pédale d'accélérateur, l'actionnement de la pédale de frein, la vitesse du véhicule, le régime moteur, ainsi que des algorithmes 17.1-17.N de détection de comportement perfectible.

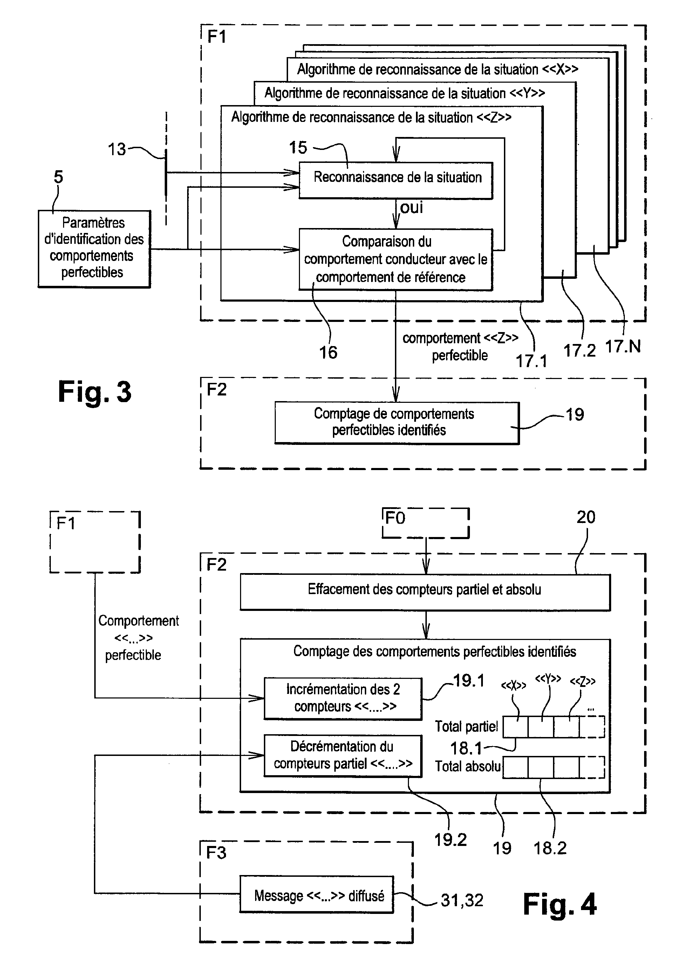

. Comme représenté sur la figure 3, chaque algorithme 17.1-17.N de détection de comportement perfectible présente deux étapes distinctes.

. Dans une première étape 15, l'algorithme 17.1-17.N détecte une situation X-Z de vie spécifique, cette situation X-Z de vie étant choisie parmi : une phase de décélération avec ou sans freinage, une évolution à vitesse stabilisée, un dépassement, une phase d'accélération prolongée. Cette situation de vie est définie par les paramètres du véhicule lus sur le réseau 13 dans une fenêtre temporelle comprise par exemple entre 2 et 45s.

. Dans une deuxième étape 16, l'algorithme 17.1-17.N analyse le comportement du conducteur sur la situation de vie détectée. Ce comportement du conducteur est défini par au moins deux points de comportement observés parmi : l'état d'enfoncement de la pédale d'accélérateur, l'actionnement de la pédale de frein, le choix d'un rapport, l'actionnement de l'embrayage.

. L'algorithme 17.1-17.N sélectionne dans la base de données 5 un comportement de conducteur recommandé pour la situation de vie courante correspondant au type de conduite souhaité. Si la conduite souhaitée est celle minimisant la consommation, le comportement recommandé est défini par des points de comportement recommandés (correspondants au moins aux points de comportements observés) choisis parmi les suivants : l'état d'enfoncement de la pédale d'accélérateur, l'actionnement de la pédale de frein, le choix d'un rapport, l'actionnement de l'embrayage, pour lesquels la consommation du véhicule est minimale pour la situation de vie détectée.

. L'algorithme 17.1-17.N compare 16 ensuite les points de comportement avec les points de comportement recommandés correspondants. L'algorithme identifie ensuite les points de comportement perfectibles, c'est-à-dire les points de comportement éloignés des points de comportement recommandés. Et la fonction F1 informe la fonction F2 des points de comportement perfectibles identifiés, de sorte que le conducteur est invité à corriger son comportement sur au moins le point de comportement le plus critique (le plus éloigné d'un point de comportement recommandé ou le plus fréquent).

. L'instant de détection d'un comportement perfectible n'est pas toujours approprié pour informer le conducteur de ce qu'il pourrait faire pour améliorer sa consommation. En effet, l'assistant ne devrait pas perturber le conducteur ni détourner son attention. Si le conducteur est en train de tourner ou d'accélérer, il est préférable d'attendre une situation de vie stable pour diffuser le message d'information audio et/ou vidéo via les fonctions F4 et F5.

. Dans une mise en oeuvre, la fonction F3 considère que la situation de vie est stable pour la diffusion audio (conditions audio 22 remplies) lorsque la vitesse du véhicule est stable depuis une certaine durée, par exemple plus de 3s, et lorsque le conducteur a le pied sur la pédale d'accélérateur mais n'est pas en situation de virage.

. Tandis que la fonction F3 considère que la situation de vie est stable pour la diffusion vidéo (conditions vidéo 23 remplies) lorsque le véhicule est immobile et que le conducteur n'a pas le pied sur la pédale d'accélérateur.

. En attendant que les conditions audio et/ou vidéo soient remplies pour la diffusion d'un message d'information, la fonction F2 assure, via la sous-fonction 19, la mémorisation des points de comportement perfectibles identifiés.

. Comme les algorithmes de reconnaissance fonctionnent en permanence tant que l'assistant est actif, plusieurs points de comportement perfectibles peuvent être identifiés avant que le message 7 d'information ne puisse être diffusé. La fonction de mémorisation F2 stocke donc de préférence tous les points de comportement perfectibles et les situations de vie X-Z auxquels ils sont associés, ainsi que leur occurrence à l'aide d'un compteur 18.1, comme représenté sur la figure 4.

. Si plusieurs comportements sont mémorisés, la sous-fonction 25 sélectionne le message à diffuser. Dans une mise en oeuvre, la sous-fonction 25 sélectionne le message par ordre décroissant d'occurrences de chaque comportement perfectible (du plus récurrent au moins fréquent). En variante, la sous-fonction 25 sélectionne le message correspondant au comportement perfectible le plus récent.

. Dans une mise en oeuvre, lorsqu'un des compteurs 18.1, 18.2 de points de comportement perfectibles atteint un certain seuil, la sous-fonction 25 sélectionne un message visant à l'amélioration du point dont le compteur 18.1, 18.2 est le plus élevé, invitant ainsi le conducteur à corriger son comportement sur au moins le point de comportement perfectible le plus fréquent.

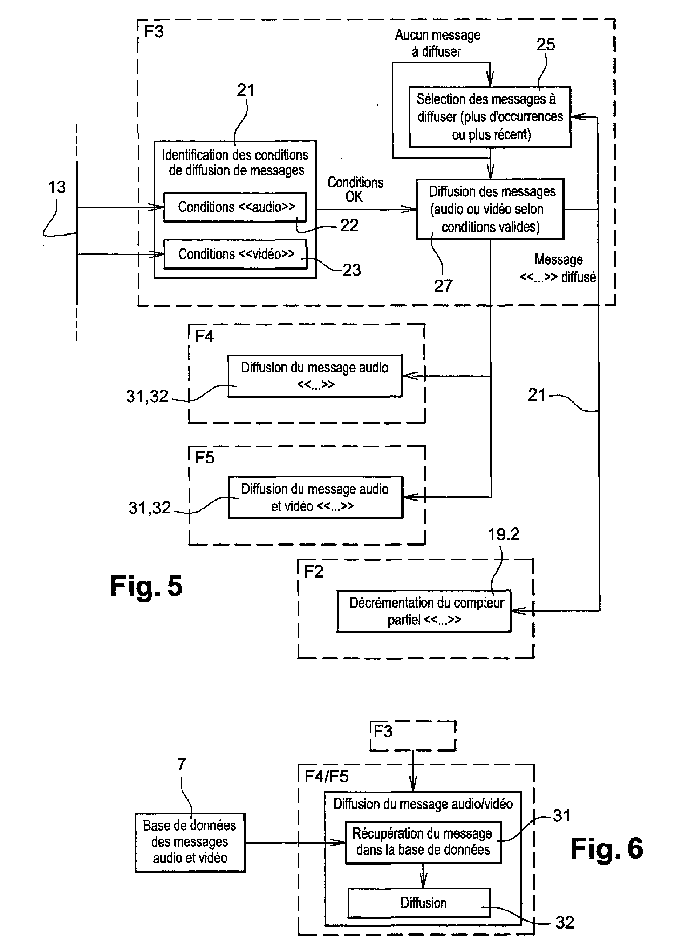

. Les points de comportement perfectibles mémorisés et leur occurrence sont décrémentés à chaque fois que la fonction F3 fournit l'information audio ou vidéo informant de conducteur du comportement à adopter. Il existe donc un dialogue 21 entre la fonction de délivrance des messages F3 et la fonction F2, comme représenté sur la figure 5.

. D'autre part, la fonction F2 peut conserver dans des compteurs 18.2 l'ensemble des points de comportement, la ou les situations de vie sur lesquelles ils ont été observés et leur occurrence, afin notamment d'établir des statistiques sur la fréquence des comportements perfectibles, indépendamment des messages diffusés. Les compteurs 18.2 ne sont donc pas décrémentés après la diffusion des messages.

. Lorsque le conducteur le demande (via un menu de l'ordinateur de bord) ou qu'il coupe son moteur, le module 1 peut afficher un bilan des points de comportement perfectibles les plus fréquents depuis le dernier démarrage du moteur. Ces affichages sont fournis par ordre décroissant d'occurrence à partir des compteurs dédiés 18.2 dans la fonction F2. S'il y a trop de comportements perfectibles, la fonction n'indique par exemple que les trois plus fréquents.

. Dans une mise en oeuvre, l'ensemble des informations des compteurs 18.1, 18.2 et des statistiques est mémorisé pour permettre une comparaison du comportement avant et après la diffusion d'un message d'information 7.

. La sous-fonction 20 de F2 assure la remise à zéro des compteurs 18.1, 18.2. La fonction F0 commande cette remise à zéro lorsque le conducteur appuie sur le bouton 15 pour désactiver l'assistant, ou active un ordinateur de bord, ou lors d'un nouveau démarrage du moteur.

. Par ailleurs, comme représenté sur la figure 4, la fonction F3 assure la diffusion du ou des message(s) 7 à destination de l'utilisateur. A cet effet, comme représenté sur la figure 6, la fonction F3 indique aux fonctions F4 et F5 quel(s) message(s) 7 diffuser. La sous-fonction 31 récupère ensuite les messages 7 stockés dans la base de données 5. Puis la sous-fonction 32 envoie des signaux à destination des systèmes audio 9 et/ou vidéo 10 pour la diffusion des messages.

. L'ensemble des informations des compteurs, mémoires et statistiques peut être déchargé vers un ordinateur non placé dans le véhicule.

. L'assistant interrompt la fourniture de messages lorsque le conducteur le désactive (via le bouton 15 ou l'ordinateur de bord). Cependant, les algorithmes de reconnaissance et le comptage des comportements perfectibles peuvent rester actif lorsque l'assistant est désactivé.

. Ainsi, en cas de réactivation, le conducteur a une information plus pertinente car elle tient compte de l'ensemble de sa conduite depuis le dernier démarrage du moteur.

. Comme représenté sur la figure 2, deux niveaux de désactivation peuvent également être mis en oeuvre :
- un mode « veille » assuré par la sous-fonction 3.3 dans lequel l'assistant ne diffuse plus de message mais continue d'analyser et de compter les comportements perfectibles, et
- un mode « désactivé » assuré par la sous-fonction 3.1 dans lequel toutes fonctions de l'assistant sont désactivées.

. Cette distinction peut se faire par le bouton 15 à plusieurs états (soit trois positions pour actif / veille / inactif, soit un bouton poussoir pour lequel chaque pression fait passer de actif à veille, de veille à inactif et de inactif à actif), ou par une option dans l'ordinateur de bord.

. Lorsque l'assistant passe en mode « désactivé » 3.1, la sous-fonction 20 efface tous les comportements mémorisés par la fonction F2.

. Les messages d'information 7 fournis par l'assistant aident le conducteur à adopter une conduite plus économique. Sous forme audio, ils expliquent clairement et succinctement comment agir sur l'accélérateur, sur la boîte de vitesses, sur l'embrayage et sur les freins pour optimiser sa consommation. Sous forme vidéo, le message audio est accompagné d'une animation graphique indiquant les actions idéales dans une situation donnée.

. Dans un premier exemple, si l'algorithme 17.1 chargé de reconnaître la situation « décélération du véhicule » détecte cette situation et considère que le comportement du conducteur y a été perfectible, par exemple parce qu'il a débrayé dès le début de la décélération, le message pourra être : « Pour optimiser votre consommation lors des décélérations, utilisez votre frein moteur et rétrogradez lorsque le régime moteur atteint 1500 tr/min environ ».

. Dans un deuxième exemple, si l'algorithme 17.2 chargé de reconnaître la situation « vitesse véhicule stabilisée comprise entre 60 et 70 km/h » détecte cette situation et considère que le comportement du conducteur y a été perfectible, par exemple parce qu'il roule sur le 3^{ème} rapport, le message pourra être : « Pour optimiser votre consommation, roulez en 5^{ème} dès que possible à partir de 60 km/h ».

. Dans un troisième exemple, si l'algorithme 17.3 chargé de reconnaître la situation accélération du véhicule » détecte cette situation et considère que le comportement du conducteur y a été perfectible, par exemple parce qu'il change de rapport trop tardivement, le message pourra être : « Pour optimiser votre consommation, passez le rapport supérieur lorsque le régime atteint 2500 tr/min environ ».

. L'assistant proposé ici permet d'apporter au conducteur une aide efficace et pertinente pour lui permettre d'optimiser sa consommation. En analysant finement sa conduite, l'assistant ne fournit que des conseils adaptés au conducteur. Ces conseils regroupent un ensemble d'attitudes à adopter (type d'accélération, régimes de changement de rapport, instants de freinage, débrayage ou non, etc.).

. Contrairement aux indicateurs partiels comme l'indicateur de rapport conseillé ou la consommation instantanée, l'assistant présenté ici fournit une information beaucoup large recouvrant l'ensemble des actions possibles du conducteur (accélération, freinage, changement de rapport, débrayage).

. L'assistant est également interactif et « intelligent » puisqu'il analyse exactement ce que fait le conducteur afin de cerner ses points faibles et de lui fournir des conseils adaptés. Il est également capable de déterminer l'instant le plus propice pour fournir ces conseils afin de ne pas détourner son attention. La forme du message est également adaptée selon les conditions de conduite.

. Cet assistant peut également fournir une information résumant les points perfectibles récurrents du conducteur, ce qui est impossible pour tout indicateur « instantané ».

. Cet assistant est déconnectable et possède un mode veille permettant de continuer l'analyse de la conduite si le conducteur ne souhaite pas être dérangé par des messages à un instant donné mais qu'il souhaite bénéficier de conseils sur ses points faibles ultérieurement.

. Enfin, cet assistant délivre des conseils efficaces pour optimiser la consommation du véhicule. Les « bonnes » attitudes pour avoir une conduite économique ne sont en effet pas assez connues. Cet assistant peut donc être une aide précieuse pour les conducteurs soucieux de leur consommation.

. L'assistant trouve aussi un intérêt pour les véhicules de flotte si on interdit sa désactivation par construction. Dans ce cas, chaque conducteur est obligatoirement sensibilisé à la conduite économique, et cela a un impact sur la consommation globale de la flotte, donc sur son coût d'utilisation. L'assistant peut donc être un argument commercial lors de la vente de flottes de véhicules.

## Revendications

1. Procédé interactif d'aide à la conduite comportant les étapes suivantes :
• sélection d'un type de conduite souhaité,
• détection (F1, 15) a posteriori d'une situation de vie, qui est une séquence temporelle, du véhicule ;
• analyse (F1) du comportement du conducteur pendant cette situation de vie,
• sélection dans une mémoire (5) d'un comportement de conducteur recommandé pour la situation de vie courante correspondant au type de conduite souhaité,
• comparaison (F1, 16) entre ledit comportement du conducteur et le comportement recommandé, et
identification des points du comportement considérés comme perfectibles et diffusion (F4, F5, 27) d'un message d'information audio et/ou vidéo (7) invitant le conducteur à corriger son comportement sur au moins le point le plus critique, le message audio et/ou vidéo (7) n'étant diffusé que si la situation de vie est considérée comme stable.

2. Procédé selon la revendication 1, **caractérisé en ce que** le type de conduite souhaité est une conduite minimisant la consommation de carburant.

3. Procédé selon la revendication 1 ou 2, **caractérisé en ce que** la situation de vie est choisie parmi : une phase de décélération sans freinage, une phase de décélération avec freinage, un dépassement, une évolution à vitesse stabilisée.

4. Procédé selon l'une des revendications précédentes, **caractérisé en ce que** le comportement perfectible est mémorisé pour autoriser la diffusion ou rediffusion du message d'information correspondant dans une condition de roulage favorable.

5. Procédé selon l'une des revendications précédentes, **caractérisé en ce que** la situation de vie est considérée comme stable si le véhicule est dans la même situation de vie depuis au moins 2s et si le conducteur a le pied sur la pédale d'accélérateur.

6. Procédé selon la revendication précédente, **caractérisé en ce que** les conditions de roulage sont en outre considérées comme non réunies si le véhicule est en situation de virage.

7. Procédé selon l'une quelconque des revendications précédentes, **caractérisé en ce que** lesdits points observés du comportement sont sélectionnés parmi au moins deux des actions suivantes : état d'enfoncement de la pédale d'accélérateur, actionnement de la pédale de frein, choix d'un rapport, débrayage.

8. Procédé selon l'une quelconque des revendications précédentes, **caractérisé en ce qu'**à chaque occurrence d'un comportement considéré perfectible un compteur (18.1) de comportements perfectibles est incrémenté.

9. Procédé selon la revendication précédente, **caractérisé en ce que** de plus, à chacun des points de comportement observés est associé un compteur (18.1) spécifique de points qui est incrémenté à chaque fois qu'un comportement perfectible est détecté qui pourrait être amélioré par une action sur ce point.

10. Procédé selon la revendication précédente, **caractérisé en ce que** lorsque le compteur de comportements perfectibles atteint un certain seuil, un message est diffusé visant à l'amélioration du point dont le compteur est le plus élevé, invitant ainsi le conducteur à corriger son comportement sur au moins le point le plus critique.

11. Procédé selon la revendication 9 ou la revendication 10, **caractérisé en ce que** le nombre d'occurrences des situations de vie est de plus mémorisé pour établir des statistiques sur la fréquence des comportements perfectibles.

12. Procédé selon la revendication précédente, **caractérisé en ce que** l'ensemble des informations des compteurs (18.1, 18.2) et des statistiques sont mémorisés pour permettre une comparaison du comportement avant et après la diffusion d'un message d'information.

13. Procédé selon l'une des revendications précédentes, **caractérisé en ce qu'**il présente deux niveaux de désactivation :
• un mode « veille » dans lequel on ne diffuse plus de message mais on continue d'analyser les comportements perfectibles, et
• un mode « désactivé » dans lequel toutes les fonctions de l'assistant sont désactivées.

14. Véhicule automobile mettant en oeuvre le procédé défini selon l'une des revendications précédentes.

## Claims

1. An interactive driving assistance method, comprising the following steps:
■ selection of a desired driving type,
■ detection (F1, 15) a posteriori of a circumstance, which is a time sequence, of the vehicle;
■ analysis (F1) of the performance of the driver during this circumstance,
■ selection in a memory (5) of a recommended driver performance for the current circumstance corresponding to the desired driving type,
■ comparison (F1, 16) between the said performance of the driver and the recommended performance, and
identification of the points of the performance considered to be improvable and transmission (F4, F5, 27) of an audio and/or video information message (7) inviting the driver to correct his performance on at least the most critical point, the audio and/or video message (7) only being transmitted if the circumstance is considered to be stable.

2. The method according to Claim 1, **characterized in that** the desired driving type is a driving which minimizes the consumption of fuel.

3. The method according to Claim 1 or 2, **characterized in that** the circumstance is selected from: a deceleration phase without braking, a deceleration phase with braking, overtaking, proceeding at a stabilized speed.

4. The method according to one of the preceding claims, **characterized in that** the improvable performance is stored to permit the transmission or retransmission of the corresponding information message in a favourable driving condition.

5. The method according to one of the preceding claims, **characterized in that** the circumstance is considered to be stable if the vehicle has been in the same circumstance for at least 2s and if the driver has his foot on the accelerator pedal.

6. The method according to the preceding claim, **characterized in that** the driving conditions are, moreover, considered to be not met if the vehicle is in a turning situation.

7. The method according to any one of the preceding claims, **characterized in that** the said observed points of the performance are selected from at least two of the following actions: state of depression of the accelerator pedal, activation of the brake pedal, selection of a gear ratio, clutch disengagement.

8. The method according to any one of the preceding claims, **characterized in that** at each occurrence of a performance which is considered to be improvable, a counter (18.1) of improvable performances is incremented.

9. The method according to the preceding claim, **characterized in that** in addition at each of the observed points of performance a specific point counter (18.1) is associated, which is incremented each time an improvable performance is detected which could be improved by an action on this point.

10. The method according to the preceding claim, **characterized in that** when the counter of improvable performances reaches a certain threshold, a message is transmitted with the aim of improving the point whose counter is the highest, thus inviting the driver to correct his performance on at least the most critical point.

11. The method according to Claim 9 or Claim 10, **characterized in that** the number of occurrences of the circumstances is, in addition, stored to establish statistics on the frequency of the improvable performances.

12. The method according to the preceding claim, **characterized in that** all the information from the counters (18.1, 18.2) and statistics are stored to permit a comparison of the performance before and after the transmission of an information message.

13. The method according to one of the preceding claims, **characterized in that** it presents two levels of deactivation:
■ a "standby" mode, in which messages are no longer transmitted, but the analysis of the improvable performances continues, and
■ a "deactivated" mode, in which all the functions of the assistant are deactivated.

14. A motor vehicle implementing the method defined according to one of the preceding claims.

## Patentansprüche

1. Interaktives Verfahren zur Unterstützung des Fahrens, das die folgenden Schritte aufweist:
• Auswahl eines gewünschten Fahrstils,
• a posteriori Erfassen (F1, 15) einer Lebenssituation des Fahrzeugs, die eine zeitliche Abfolge ist,
• Analyse (F1) des Verhaltens des Fahrers während dieser Lebenssituation,
• Auswahl aus einem Speicher (5) einer Fahrerverhaltensweise, die für die aktuelle Lebenssituation empfohlen wird, die dem gewünschten Fahrstil entspricht,
• Vergleich (F1, 16) zwischen der Verhaltensweise des Fahrers und der empfohlenen Verhaltensweise, und
Identifikation der Verhaltensaspekte, die als verbesserungswürdig betrachtet werden und Ausgabe (F4, F5, 27) einer Audio- und/oder Videomeldung (7), die den Fahrer auffordert, seine Verhaltensweise in wenigstens dem kritischsten Aspekt zu korrigieren, wobei die Audio- und/oder Videomeldung (7) nur ausgegeben wird, wenn die Lebenssituation als beständig betrachtet wird.

2. Verfahren nach Anspruch 1, **dadurch gekennzeichnet, dass** der gewünschte Fahrstil ein Fahrstil ist, der den Kraftstoffverbrauch minimiert.

3. Verfahren nach Anspruch 1 oder 2, **dadurch gekennzeichnet, dass** die Lebenssituation ausgewählt wird aus: einer Beschleunigungsphase ohne Bremsen, einer Verlangsamungsphase mit Bremsen, einem Überholen, einem Fahren mit stabilisierter Geschwindigkeit.

4. Verfahren nach einem der vorhergehenden Ansprüche, **dadurch gekennzeichnet, dass** die verbesserungswürdige Verhaltensweise gespeichert wird, um die Ausgabe oder Neuausgabe der entsprechenden Informationsmeldung in einer günstigen Fahrbedingung zu gestatten.

5. Verfahren nach einem der vorhergehenden Ansprüche, **dadurch gekennzeichnet, dass** die Lebenssituation als beständig betrachtet wird, wenn sich das Fahrzeug seit wenigstens 2 Sekunden in derselben Lebenssituation befindet und wenn der Fahrer den Fuß auf dem Gaspedal hat.

6. Verfahren nach dem vorhergehenden Anspruch, **dadurch gekennzeichnet, dass** die Fahrbedingungen ferner als nicht vereint betrachtet werden, wenn sich das Fahrzeug in Kurvensituation befindet.

7. Verfahren nach einem der vorhergehenden Ansprüche, **dadurch gekennzeichnet, dass** die beobachteten Aspekte der Verhaltensweise ausgewählt werden aus wenigstens zwei der folgenden Aktionen: Zustand des Drückens des Gaspedals, Betätigen des Bremspedals, Auswahl eines Gangs, Auskuppeln.

8. Verfahren nach einem der vorhergehenden Ansprüche, **dadurch gekennzeichnet, dass** bei jedem Auftreten einer als verbesserungswürdig betrachteten Verhaltensweise ein Zähler (18.1) verbesserungswürdiger Verhaltensweisen erhöht wird.

9. Verfahren nach dem vorhergehenden Anspruch, **dadurch gekennzeichnet, dass** außerdem jedem der beobachteten Verhaltensweisenaspekte ein spezifischer Aspektezähler (18.1) zugewiesen ist, der jedes Mal erhöht wird, wenn eine verbesserungswürdige Verhaltensweise erfasst wird, die durch eine Einwirkung auf diesen Aspekt verbessert werden könnte.

10. Verfahren nach dem vorhergehenden Anspruch, **dadurch gekennzeichnet, dass**, wenn der Zähler der verbesserungswürdigen Verhaltensweisen einen bestimmten Schwellenwert erreicht, eine Meldung ausgegeben wird, die auf die Verbesserung des Aspekts abzielt, dessen Zähler der höchste ist, die daher den Fahrer auffordert, seine Verhaltensweise wenigstens in dem kritischsten Aspekt zu korrigieren.

11. Verfahren nach Anspruch 9 oder Anspruch 10, **dadurch gekennzeichnet, dass** die Anzahl der Vorkommen der Lebenssituationen außerdem gespeichert wird, um Statistiken zur Häufigkeit der verbesserungswürdigen Verhaltensweisen zu erstellen.

12. Verfahren nach dem vorhergehenden Anspruch, **dadurch gekennzeichnet, dass** sämtliche Informationen der Zähler (18.1, 18.2) und der Statistiken gespeichert werden, um einen Vergleich der Verhaltensweise vor und nach der Ausgabe einer Informationsmeldung zu erlauben.

13. Verfahren nach einem der vorhergehenden Ansprüche, **dadurch gekennzeichnet, dass** es zwei Deaktivierungsniveaus aufweist:
• einen "Standby"-Modus, bei dem man keine Meldung mehr ausgibt, bei dem man aber das Analysieren der verbesserungswürdigen Verhaltensweisen fortsetzt,
und
• einen "deaktivierten" Modus, bei dem alle Funktionen der Unterstützung deaktiviert sind.

14. Motorfahrzeug, das das nach einem der vorhergehenden Ansprüche definierte Verfahren umsetzt.
